# FASCICULE DE BREVET EUROPEEN

(11) **EP 1 388 190 B1**
(45) Date de publication et mention de la délivrance du brevet: **10.10.2007**
(21) Numéro de dépôt: 02712950.1
(22) Date de dépôt: 20.03.2002
(51) Int. Cl.: H02G 3/22, H02G 3/08

(54) **DISPOSITIF D'ETANCHEITE POUR LE PASSAGE D'UN CABLE A TRAVERS UNE PAROI D'UNE CONDUITE SOUS PRESSION**
DICHTUNGSVORRICHTUNG FÜR DIE DURCHFÜHRUNG EINES KABELS DURCH EINE WAND EINES UNTER DRUCK STEHENDEN ROHRS
SEALING DEVICE FOR PASSING A CABLE THROUGH A PRESSURISED PIPE WALL

(30) Priorité: 30.04.2001 LU 90768
(43) Date de publication de la demande: 11.02.2004
(73) Titulaire: Cauche, Michel, 8360 Goetzingen (LU)
(72) Inventeur: Cauche, Michel, 8360 Goetzingen (LU)
(74) Mandataire: Schmitt, Armand
(86) Numéro de dépôt international: PCT/EP2002/003080
(87) Numéro de publication internationale: WO 2002/089282

(56) Documents cités:
- DE-C- 3 623 547
- GB-A- 2 192 760
- US-A- 3 142 500

## Description

### Domaine technique auquel se rapporte l'invention

La présente invention concerne un dispositif d'étanchéité pour le passage d'un câble à travers une paroi d'une conduite sous pression.

### Etat de la technique antérieure

Face à l'accroissement constant des informations à transmettre, les opérateurs de réseaux téléphoniques et de télévision ont développé des technologies à haut débit, dans lesquelles la fibre optique apparaît comme le support privilégié.

La mise en place de réseaux câblés à fibres optiques et le remplacement des réseaux existants de câbles de fils de cuivre par des réseaux de câbles à fibres optiques sont dès lors des voies importantes de développement pour les opérateurs de télécommunications.

La méthode traditionnelle pour mettre en place des réseaux câblés est évidemment l'excavation, mais elle apparaît comme bien trop laborieuse devant les distances considérables à couvrir et aussi comme bien trop dommageable, notamment pour les infrastructures de voirie.

Une meilleure solution consiste à faire passer les câbles à fibres optiques dans des conduites d'eau existantes, comme il en est déjà d'usage pour certains réseaux à fils de cuivre et certains réseaux à fibres optiques. Cependant, un problème technique subsiste encore au niveau du passage de tels câbles à travers les parois des conduites. En effet, les dispositifs d'étanchéité actuels pour le passage de câbles à travers les parois des conduites n'offrent pas une sécurité et une étanchéité satisfaisantes. De plus, ils ne sont pas suffisamment résistants pour être installés sur les conduites d'eau sous haute pression.

Un exemple de passage d'un câble additionnel à travers une paroi d'une conduite sous pression est décrit dans GB-A- 2 192 760.

### Objet de l'invention

L'objet de la présente invention est donc de proposer un dispositif d'étanchéité permettant le passage d'un câble à travers une paroi d'une conduite sous pression, qui présente une bonne étanchéité ainsi qu'une bonne résistance à la pression. Conformément à l'invention, cet objectif est atteint par un dispositif d'étanchéité selon la revendication 1.

### Exposé de l'invention

Conformément à l'invention, un dispositif d'étanchéité pour le passage d'un câble à travers une paroi d'une conduite sous pression comprend un tube monté de façon étanche dans un orifice de la paroi et traversé par le câble. II sera apprécié que le présent dispositif d'étanchéité comprend une armature spiralée entourant le câble dans le tube ainsi que deux moyens de fermeture traversés par le câble et fixés à chacune des deux extrémités du tube. Le dispositif d'étanchéité comprend en outre une résine qui remplit le tube et dans laquelle l'armature spiralée et le câble sont noyés. La résine immobilise donc le câble et obture complètement l'intérieur du tube, assurant ainsi l'étanchéité du dispositif. On notera plus particulièrement la présence de l'armature spiralée noyée dans la résine, qui a de préférence une longueur telle qu'elle s'appuie sur chacun des moyens de fermeture. Cette armature spiralée se révèle avantageuse sous plusieurs aspects. Tout d'abord, lors du montage du dispositif, elle permet le centrage et le guidage du câble à l'intérieur du tube, ce qui évite par exemple les bourrages. De plus, l'armature spiralée assure un renforcement de la résine et permet une meilleure distribution des forces à l'intérieur du dispositif d'étanchéité. Le dispositif d'étanchéité selon l'invention possède donc une structure qui lui confère une résistance accrue à la pression interne de la conduite. Il convient particulièrement bien pour une installation sur des conduites haute pression.

Selon un mode de réalisation préféré du présent dispositif d'étanchéité, les moyens de fermeture sont des bouchons vissés sur chacune des deux extrémités du tube. Chaque bouchon est ainsi muni d'un filetage coopérant avec un filetage de l'extrémité du tube sur laquelle il est vissé.

Afin d'améliorer l'étanchéité du dispositif, un joint torique est avantageusement monté entre chacun des moyens de fermeture et la résine.

De préférence, le tube est fixé par soudage dans l'orifice de la paroi de la conduite sous pression. En effet, souder le tube à la paroi empêche l'expulsion de celui-ci sous l'effet de la pression à l'intérieur de la conduite. De plus, le soudage du tube dans l'orifice de la paroi garantit une bonne étanchéité.

Pour limiter un endommagement du câble par cisaillement au niveau des moyens de fermeture, le câble est de préférence entouré par au moins un joint de projection dans chacun des moyens de fermeture.

Différents types de résines peuvent être utilisés. Pour une utilisation sur des conduites d'eau, on choisira évidemment une résine synthétique susceptible de résister à l'eau après polymérisation. De plus, la résine devrait préférablement présenter une forte adhérence aux matériaux du tube et de la spirale. Une résine préférée est une résine de polyuréthane à deux composants, qui présente une bonne adhérence à une armature spiralée et un tube métalliques, et qui se répartit bien à l'intérieur du tube.

Le dispositif d'étanchéité selon l'invention convient pour le passage étanche d'un câble à travers divers types de conduites sous pression. Il est particulièrement bien adapté pour le passage étanche de câbles comprenant des faisceaux de fibres optiques, mais il est clair qu'il convient également pour le passage de câbles comprenant des fils de cuivres ou autres.

Selon un autre aspect de l'invention, on propose un procédé pour le passage étanche d'un câble à travers une paroi d'une conduite sous pression, comprenant l'étape consistant à passer le câble à travers un tube monté de manière étanche dans un orifice de la paroi afin de traverser cette dernière. Le présent procédé comprend en outre l'étape de mise en place d'une armature spiralée de sorte à ce qu'elle entoure le câble dans le tube. Cette armature peut être mise en place après avoir passé le câble à travers le tube, mais elle sera préférentiellement placée autour du câble ou dans le tube avant l'insertion du câble dans ce dernier, afin d'y servir de guide. De plus, le procédé comprend la fixation de deux moyens de fermeture, traversés par le câble, sur les extrémités du tube. Enfin, une fois le câble, l'armature spiralée et les moyens de fermeture mis en place, une résine est injectée dans le tube afin de le remplir et de noyer le câble et l'armature dans la résine. Cette résine obture donc complètement l'intérieur du tube est en assure l'étanchéité.

Dans un mode de réalisation préféré du présent procédé, un joint provisoire est mis en place à chacune des extrémités du tube avant la fixation des moyens de fermeture et la résine est injectée dans le tube à travers au moins un des joints provisoires.

Une fois la résine polymérisée, les moyens de fermeture sont de préférence démontés et les joints provisoires retirés et remplacés par des joints toriques. Les moyens de fermeture sont ensuite à nouveau fixés sur les extrémités du tube.

### Brève description des Figures

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
Fig.1: une vue en coupe d'un mode de réalisation préféré d'un dispositif d'étanchéité selon l'invention ; et
Fig.2: une vue en coupe éclatée du dispositif de la Fig.1.

Sur les figures, les mêmes références désignent des éléments identiques ou similaires.

### Description détaillée de quelques modes de réalisation avantageux de l'invention

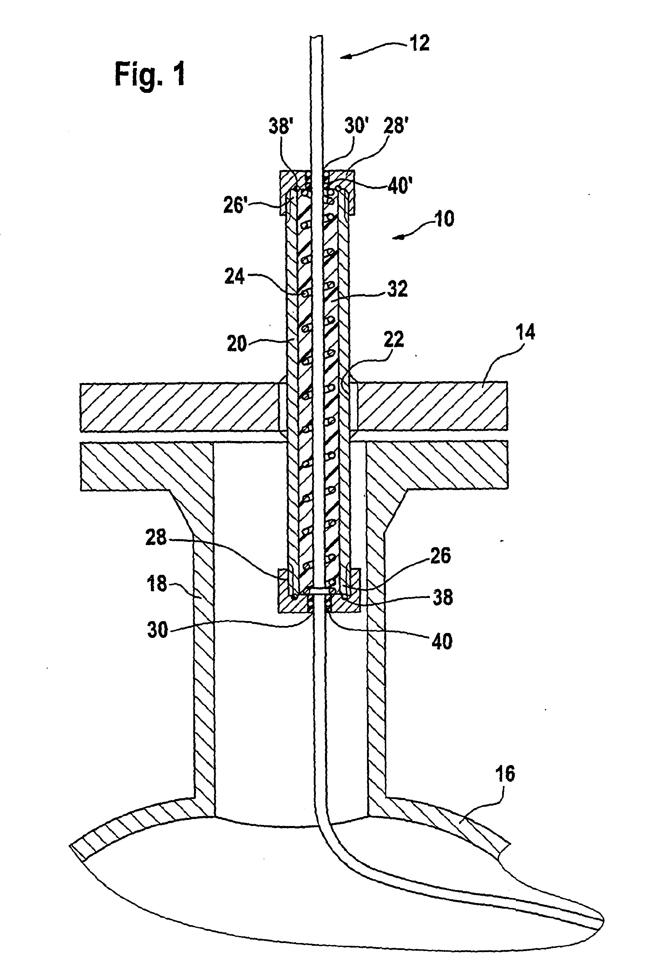

La Fig.1 représente une vue en coupe d'un mode de réalisation préféré d'un dispositif d'étanchéité 10 pour le passage d'un câble 12 à travers une paroi d'une conduite sous pression 16. Comme on le voit, le dispositif d'étanchéité 10 est monté sur un couvercle 14 fixé à un piquage 18 pratiqué sur la conduite d'eau sous pression 16. Le dispositif d'étanchéité 10 comprend un tube 20 qui est monté de manière étanche dans un orifice 22 du couvercle 14. On utilisera généralement un tube 20 métallique afin de pouvoir le souder dans l'orifice 22, ce qui permet une liaison solide et étanche. Le câble 12 traverse le couvercle 14 à travers ce tube 20. On remarquera qu'à l'intérieur du tube 20, le câble 12 est entouré par une armature spiralée 24, de préférence métallique. A chacune de ses extrémités 26 et 26', le tube 20 est fermé par un bouchon 28, resp. 28'. Les signes de référence 30 et 30' indiquent une ouverture traversée par le câble 12 dans chacun des bouchons 28, 28'. Pour leur fixation, ces bouchons 28 et 28' sont chacun munis d'un filetage qui coopère avec un filetage sur l'extrémité 26 resp. 26' du tube 20. Enfin, l'intérieur du tube 20 est rempli par une résine 32, dans laquelle sont noyés l'armature spiralée 24 et le câble 12. Cette résine 32 immobilise le câble 12 et obture le tube 20, assurant ainsi l'étanchéité du dispositif 10.

Comme on peut le voir sur la Fig.1, l'armature spiralée 24 entoure de préférence le câble 12 sur toute sa longueur entre les deux bouchons 28 et 28'. Cela permet en outre que les bouchons 28 et 28' soient en contact avec l'armature spiralée 24 et la résine 32, afin de permettre une meilleure transmission des forces qui s'exercent depuis l'intérieur de la conduite 16 sur le dispositif 10.

On notera que la présence de l'armature spiralée 24 dans la résine 32 permet un renforcement de cette dernière, et une meilleure répartition des forces dans le dispositif 10. L'armature spiralée 24, qui s'appuie donc sur les deux bouchons 28 et 28', transmet la poussée résiduelle sur la section de la résine 32 vers les bouchons 28 et 28'. Le présent dispositif d'étanchéité 10 présente donc, en plus d'une bonne étanchéité, une résistance accrue aux forces de pression. En particulier, le présent dispositif présente une meilleure étanchéité et une meilleure résistance à la pression qu'un dispositif qui comprendrait un tube traversé par un câble et simplement rempli de résine.

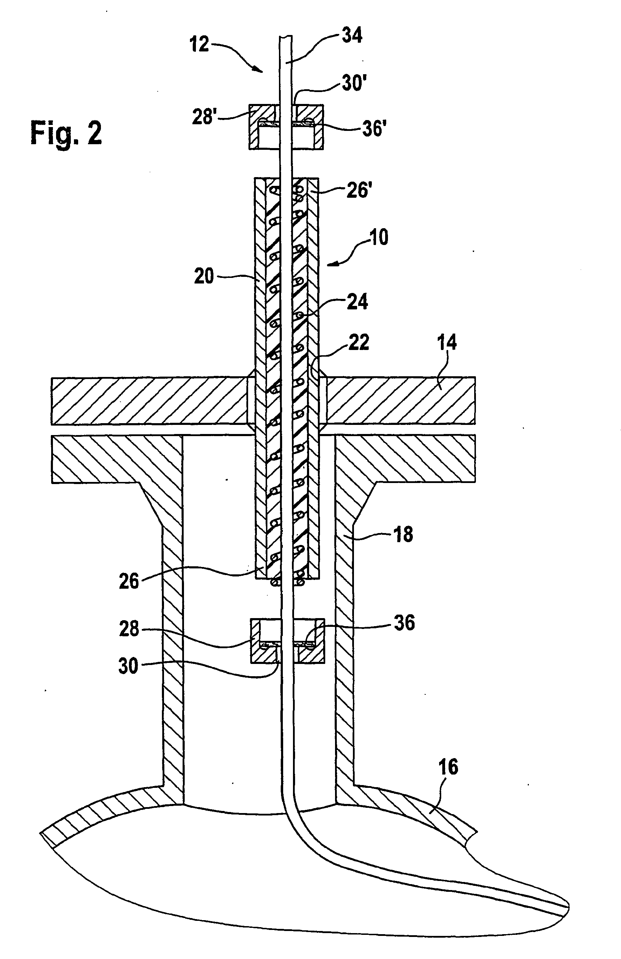

Un mode de réalisation préféré d'un procédé pour réaliser le dispositif d'étanchéité 10 est décrit ci-dessous à l'aide de la Fig.2. Il convient tout d'abord de noter que la réalisation du dispositif d'étanchéité 10 ne doit pas nécessairement se faire alors que le couvercle 14 est fixé au piquage 18. En fait, un opérateur, chargé de faire passer le câble à travers la paroi, utilisera de préférence un couvercle 14 dans lequel le tube 20 a été soudé à l'avance, ce qui permet un gain de temps. L'opérateur peut donc installer son poste de travail dans un endroit à l'abri des intempéries, comme par exemple une baraque de chantier, ce qui est souhaitable lorsque l'on travaille avec des résines.

Une extrémité 34 du câble 12 est alors passée successivement à travers un premier bouchon de fermeture 28, un premier joint provisoire 36 et l'armature spiralée 24 de sorte que cette dernière entoure le câble 12. Le câble 12 ainsi entouré par l'armature spiralée 24 est ensuite inséré dans le tube 20, ce qui permet de centrer le câble 12 à l'intérieur du tube 20 et d'éviter les bourrages. L'extrémité 34 du câble 12 est alors menée à travers un deuxième joint provisoire 36' et le deuxième bouchon 28'. Les joins provisoires 36 et 36' sont ensuite mis en place; ils peuvent être par ex. en carton et serviront ultérieurement pour l'injection de la résine 32. Puis les bouchons 28 et 28' sont vissés sur les extrémités 26 et 26' du tube 20. On notera qu'une fois les bouchons 28 et 28' mis en place, le câble 12 est automatiquement centré et maintenu rectiligne à l'intérieur du tube 20, grâce à l'armature spiralée 24. La longueur de cette dernière est de préférence choisie de sorte à ce qu'elle entoure le câble 12 entre les deux bouchons 28 et 28' et qu'elle soit légèrement comprimée par les deux bouchons 28 et 28' lorsqu'ils sont en place. Il est clair que pour que les extrémités de l'armature spiralée 24 puissent s'appuyer sur les bouchons 28 et 28', les ouvertures 30 et 30' des bouchons 28 et 28' devraient avoir un diamètre inférieur à celui de l'armature 24.

Dans l'étape suivante du procédé, la résine 32 est injectée à l'intérieur du tube 20 en quantité suffisante pour remplir complètement l'intérieur du tube 20. Le câble 12 et l'armature spiralée 24 sont alors noyés dans la résine 32. Cette injection se fait à travers les joints en carton provisoires 36 et 36', par l'orifice 30 et/ou 30' des bouchons 28 et 28'. Une fois la résine 32 polymérisée, les bouchons 28 et 28' sont de préférence démontés afin de retirer les joints provisoires 36 et 36' et de les remplacer par des joints toriques 38 et 38'. Il serait toutefois possible de conserver les joints provisoires 36 et 36' et de rajouter les joints toriques 38 et 38' par dessus. Les bouchons de fixation 28 et 28' sont alors remontés sur les extrémités 26 et 26' du tube 20.

Ensuite des joints de protection 40 et 40' (voir Fig.1) sont avantageusement placés et collés dans l'ouverture 30 resp. 30' de chaque bouchon 28 resp. 28' afin d'y entourer le câble 12. On évitera ainsi au câble 12 d'être cisaillé à la sortie du dispositif d'étanchéité 10.

Une fois le montage du dispositif d'étanchéité 10 sur le couvercle 14 effectué, le couvercle 14 est à nouveau monté sur le piquage 18 de la conduite d'eau sous pression 16.

En ce qui concerne plus spécifiquement la résine 32, on choisira de préférence une résine synthétique présentant une bonne adhérence à la paroi du tube 20 et à l'armature 24. Une résine préférée est une résine de polyuréthane à deux composants. De préférence, les propriétés visées pour une telle résine polyuréthane sont approximativement une résistance à la pression de 5 N/mm², une dureté de l'ordre de 80 Shore D et un module d'élasticité d'environ 3000 MPa.

Le présent procédé permet donc de réaliser, sur divers types de conduites 16, un dispositif d'étanchéité 10 qui présente une bonne résistance à des pressions élevées. Le dispositif d'étanchéité 10 est particulièrement indiqué pour le passage d'un câble 12, tel qu'un câble à fibres optiques, dans des conduites d'eau haute pression.

## Revendications

1. Dispositif d'étanchéité pour le passage d'un câble (12) à travers une paroi d'une conduite sous pression (16), comprenant:
un tube (20) monté de façon étanche dans un orifice (22) de ladite paroi, ledit tube (20) étant traversé par ledit câble (12);
**caractérisé par**
une armature spiralée (24) entourant ledit câble (12) dans ledit tube (20) ; deux moyens de fermeture fixés à chacune des deux extrémités (26, 26') dudit tube (20), chacun desdits moyens de fermeture étant traversé par ledit câble (12);
une résine (32) remplissant ledit tube (20) et dans laquelle ladite armature spiralée (24) et ledit câble (12) sont noyés.

2. Dispositif d'étanchéité selon la revendication 1, **caractérisé en ce que** ledit tube (20) comprend à chacune de ses extrémités (26, 26') un filetage et **en ce que** lesdits moyens de fermeture sont des bouchons (28, 28') munis d'un filetage coopérant avec le filetage de l'extrémité (26, 26') sur laquelle il est monté.

3. Dispositif d'étanchéité selon l'une quelconque des revendications précédentes, **caractérisé par** un joint torique (38, 38') monté entre chacun desdits moyens de fermeture et ladite résine (32).

4. Dispositif d'étanchéité selon l'une quelconque des revendications précédentes, **caractérisé en ce que** ledit tube (20) est soudé dans ledit orifice (22) de ladite paroi.

5. Dispositif d'étanchéité selon l'une quelconque des revendications précédentes, **caractérisé par** au moins un joint de protection (40, 40') entourant ledit câble (12) dans chacun desdits moyens de fermeture.

6. Dispositif d'étanchéité selon l'une quelconque des revendications précédentes, **caractérisé en ce que** ladite résine (32) adhère fortement audit tube (20) et à ladite armature spiralée (24).

7. Dispositif d'étanchéité selon l'une quelconque des revendications précédentes, **caractérisé en ce que** ladite résine (32) est une résine de polyuréthane à deux composants.

8. Dispositif d'étanchéité selon l'une quelconque des revendications précédentes, **caractérisé en ce que** ladite conduite sous pression (16) est une conduite d'eau.

9. Dispositif d'étanchéité selon l'une quelconque des revendications précédentes, **caractérisé en ce que** ledit câble (12) comprend un faisceau de fibres optiques.

10. Dispositif d'étanchéité selon l'une quelconque des revendications 1 à 8, **caractérisé en ce que** ledit câble (12) comprend un faisceau de fils de cuivre.

11. Procédé pour le passage étanche d'un câble (12) à travers une paroi d'une conduite sous pression (16), comprenant le passage dudit câble (12) à travers un tube (20) monté de manière étanche dans un orifice de ladite paroi, ledit procédé comprenant en outre les étapes de mise en place d'une armature spiralée (24) de sorte à ce qu'elle entoure ledit câble (12) dans ledit tube (20) ; de fixation de deux moyens de fermeture, traversés par ledit câble (12), sur les extrémités (26, 26') dudit tube (20) ; et d'injection d'une résine (32) dans ledit tube (20) fermé par lesdits moyens de fermeture de sorte à le remplir et noyer ledit câble (20) et ladite armature spiralée (24) dans ladite résine (32).

12. Procédé selon la revendication précédente, **caractérisé en ce qu'**un joint provisoire (36, 36') est mis en place à chacune des extrémités (26, 26') dudit tube (20) avant la fixation desdits moyens de fermeture; et **en ce que** ladite résine (32) est injectée dans ledit tube (20) à travers au moins un joint provisoire (36, 36').

13. Procédé selon la revendication précédente, **caractérisé en ce qu'**après polymérisation de ladite résine (32), lesdits moyens de fermeture sont démontés, lesdits joints provisoires (36, 36') retirés et remplacés par des joints toriques (38, 38'), et lesdits moyens de fermeture à nouveau fixés sur ledit tube (20).

14. Procédé selon l'une quelconque des revendications 11 à 13, **caractérisé en ce que** ladite résine (32) est une résine de polyuréthane à deux composants.

## Claims

1. Sealing device for passing a cable (12) through the wall of a pressurized pipe (16), comprising:
a tube (20) mounted in a manner impervious to leaks in an orifice (22) in the pipe wall, the cable (12) passing through this tube (20):
**characterized by**:
a spiral reinforcement (24) surrounding the cable (12) inside the tube (20);
two closing devices fixed to each end (26, 26') of the tube (20), the cable (12) passing through each of these closing devices;
a resin (32) filling the tube (20) in which are immersed the spiral reinforcement (24) and the cable (12).

2. Sealing device according to Claim 1, **characterized in that** the tube (20) comprises a thread at each of its ends (26, 26') and **in that** the closing devices are plugs (28, 28') equipped with a thread engaging with the thread of the end (26, 26') at which it is fitted.

3. Sealing device according to either of the above Claims, **characterized by** an O-ring (38, 38') fitted between each of the closing devices and the resin (32).

4. Sealing device according to any one of the above Claims, **characterized in that** the tube (20) is welded into the orifice (22) of the pipe wall.

5. Sealing device according to any one of the above Claims, **characterized by** at least one protective joint seal (40, 40') surrounding the cable (12) in each of these closing devices.

6. Sealing device according to any one of the above Claims, **characterized in that** the resin (32) adheres strongly to the tube (20) and the spiral reinforcement (24).

7. Sealing device according to any one of the above Claims, **characterized in that** the resin (32) is a binary polyurethane resin.

8. Sealing device according to any one of the above Claims, **characterized in that** the pressurized pipe (16) is a water pipe.

9. Sealing device according to any one of the above Claims, **characterized in that** the cable (12) comprises a bundle of optical fibres.

10. Sealing device according to any one of Claims 1 to 8, **characterized in that** the cable (12) comprises a bundle of copper wires.

11. Method for passing a cable (12) in a leakproof manner through the wall of a pressurized pipe (16), comprising the passage of the cable (12) through a tube (20) mounted in a manner impervious to leaks in an orifice in the pipe wall, this method also comprising the stages of fitting a spiral reinforcement (24) in such a way that it surrounds the cable (12) in the tube (20); the fitting of two closing devices through which the cable (12) passes at the ends (26, 26') of the tube (20); and the injection of a resin (32) into the tube (20) closed by the closing devices so as to fill it and immerse the tube (20) and the spiral reinforcement (24) in the resin (32).

12. Method according to the previous Claim, **characterized in that** a provisional joint (36, 36') is fitted to both ends (26, 26') of the tube (20) before the fitting of the closing devices; and that the resin (32) is injected into the tube (20) through at least one provisional joint (36, 36').

13. Method according to the previous Claim, **characterized in that** after polymerization of the resin (32), the closing devices are removed, the provisional joints (36, 36') are withdrawn and replaced with O-rings (38, 38') and the closing devices are again fixed on to the tube (20).

14. Method according to any one of Claims 11 to 13, **characterized in that** the resin (32) is a binary polyurethane resin.

## Patentansprüche

1. Dichtungsvorrichtung für die Durchführung eines Kabels (12) durch eine Wand einer unter Druck stehenden Rohrleitung (16), umfassend:
ein Rohr (20), welches in einer Öffnung (22) der Wand dicht montiert ist, wobei das Rohr (20) von dem Kabel (12) durchlaufen wird;
**gekennzeichnet durch**
eine Spiralarmierung (24), welche das Kabel (12) in dem Rohr (20) umgibt;
zwei Verschlussmittel, welche jeweils an einem der beiden Enden (26, 26') des Rohrs (20) befestigt sind, wobei jedes Verschlussmittel von dem Kabel (12) durchlaufen wird;
ein Harz (32), welches das Rohr (20) ausfüllt und in dem die Spiralarmierung (24) und das Kabel (12) eingebettet sind.

2. Dichtungsvorrichtung nach Anspruch 1, **dadurch gekennzeichnet, dass** das Rohr (20) an jedem seiner Enden (26, 26') ein Gewinde aufweist und dass die Verschlussmittel Kappen (28, 28') mit einem Gewinde sind, welches mit dem Gewinde des Endes (26, 26'), auf dem die Kappe montiert ist, zusammenwirkt.

3. Dichtungsvorrichtung nach irgendeinem der vorhergehenden Ansprüche, **gekennzeichnet durch** einen O-Ring, welcher zwischen jedem der Verschlussmittel und dem Harz (32) montiert ist.

4. Dichtungsvorrichtung nach irgendeinem der vorhergehenden Ansprüche, **dadurch gekennzeichnet, dass** das Rohr (20) in der Öffnung (22) der Wand eingeschweißt ist.

5. Dichtungsvorrichtung nach irgendeinem der vorhergehenden Ansprüche, **gekennzeichnet durch** mindestens eine Schutzdichtung (40, 40'), welche das Kabel (12) in jedem der Verschlussmittel umgibt.

6. Dichtungsvorrichtung nach irgendeinem der vorhergehenden Ansprüche, **dadurch gekennzeichnet, dass** das Harz (32) fest am Rohr (20) und an der Spiralarmierung (24) klebt.

7. Dichtungsvorrichtung nach irgendeinem der vorhergehenden Ansprüche, **dadurch gekennzeichnet, dass** das Harz (32) ein Zweikompönenten-Polyurethanharz ist.

8. Dichtungsvorrichtung nach irgendeinem der vorhergehenden Ansprüche, **dadurch gekennzeichnet, dass** die unter Druck stehende Rohrleitung (16) eine Wasserrohrleitung ist.

9. Dichtungsvorrichtung nach irgendeinem der vorhergehenden Ansprüche, **dadurch gekennzeichnet, dass** das Kabel (12) ein Lichtleiterbündel beinhaltet.

10. Dichtungsvorrichtung nach irgendeinem der Ansprüche 1 bis 8, **dadurch gekennzeichnet, dass** das Kabel (12) ein Kupferdrahtbündel beinhaltet.

11. Verfahren zur dichten Durchführung eines Kabels (12) durch eine Wand einer unter Druck stehenden Rohrleitung (16), umfassend die Durchführung des Kabels (12) durch ein in einer Öffnung der Wand dicht montiertes Rohr (20), wobei das Verfahren zudem Schritte umfasst, bei denen eine Spiralarmierung (24) so angebracht wird, dass sie das Kabel (12) im Rohr (20) umgibt; zwei von dem Kabel (12) durchlaufene Verschlussmittel an den Enden (26, 26') des Rohrs (20) befestigt werden; und ein Harz in das mit den Verschlussmitteln verschlossene Rohr (20) eingespritzt wird, so dass es ausgefüllt wird und das Kabel (20) und die Spiralarmierung (24) in dem Harz (32) eingebettet werden.

12. Verfahren nach dem vorhergehenden Anspruch, **dadurch gekennzeichnet, dass** vor der Befestigung der Verschlussmittel eine provisorische Dichtung (36, 36') an jedem der Enden (26, 26') des Rohrs (20) angebracht wird; und dass das Harz (32) durch mindestens eine provisorische Dichtung (36, 36') hindurch in das Rohr (20) eingespritzt wird.

13. Verfahren nach dem vorhergehenden Anspruch, **dadurch gekennzeichnet, dass** nach erfolgter Polymerisation des Harzes (32) die Verschlussmittel abmontiert, die provisorischen Dichtungen (36, 36') entfernt und durch O-Ringe (38, 38') ersetzt und die Verschlussmittel wieder am Rohr (20) befestigt werden.

14. Verfahren nach irgendeinem der Ansprüche 11 bis 13, **dadurch gekennzeichnet, dass** das Harz (32) ein Zweikomponenten-Polyurethanharz ist.
